# EUROPÄISCHE PATENTSCHRIFT

(11) **EP 0 641 538 B1**
(45) Veröffentlichungstag und Bekanntmachung des Hinweises auf die Patenterteilung: **04.03.1998**
(21) Anmeldenummer: 94110631.2
(22) Anmeldetag: 08.07.1994
(51) Int. Cl.: A47L 9/28

(54) **Vorrichtung zur Regelung der Leistungsaufnahme eines Staubsaugers**
Vacuum cleaner power control device
Dispositif de réglage de la puissance d'un aspirateur

(30) Priorität: 12.08.1993 DE 4327070
(43) Veröffentlichungstag der Anmeldung: 08.03.1995
(73) Patentinhaber: Kurz, Gerhard, D-75382 Althengstett (DE)
(72) Erfinder: Kurz, Gerhard, D-75382 Althengstett (DE); Kraft, Manfred, D-75387 Neubulach (DE)
(74) Vertreter: Otte, Peter, Dipl.-Ing.

(56) Entgegenhaltungen:
- EP-A- 0 264 728
- EP-A- 0 320 878
- EP-A- 0 370 610
- DE-A- 4 116 407
- PATENT ABSTRACTS OF JAPAN vol. 12, no. 476 (E-693) 13. Dezember 1988 & JP-A-63 194 593 (TOKYO ELECTRIC CO LTD) 11. August 1988
- PATENT ABSTRACTS OF JAPAN vol. 13, no. 62 (E-715) 13. Februar 1989 & JP-A-63 249 491 (HITACHI LTD) 17. Oktober 1988

## Beschreibung

### Stand der Technik

Die Erfindung geht aus von einer Vorrichtung zur Regelung der Leistungsaufnahme eines Staubsaugers. Eine solche Vorrichtung ist aus der EP-A-0 320 878 bekannt.

Es ist bekannt, bei einem Staubsauger eine automatische Saugleistungssteuerung vorzusehen (EP 0 379 680 B1), bei der der das Gebläse des Staubsaugers antreibende Elektromotor von einer Phasenanschnitt-Steuerschaltung angesteuert ist und in seiner Drehzahl bzw. Leistungsaufnahme so beeinflußt wird, daß sich ein im wesentlichen konstanter oder sich lediglich innerhalb einer vorgegebenen Bandbreite ändernder Unterdruck im Ansaugbereich des Staubsaugers erzeugt wird.

Zu diesem Zweck sind Zwei auf unterschiedliche Unterdruck-Ansprechschwellwerte justierte, üblicherweise membrangesteuerte Unterdruckschalter vorgesehen und so mit einer die Phasenanschnitt-Steuerschaltung umfassenden Ansteuerschaltung für den Elektromotor verknüpft, daß dann, wenn beide Unterdruckschalter geöffnet sind, die Phasenanschnittsteuerschaltung im Sinne einer steigenden Leistungsabgabe reagiert, während dann, wenn beide Unterdruckschalter geschlossen sind, der Elektromotor auf eine geringere Leistungsaufnahme angesteuert wird, so daß dann, wenn einer der Unterdruckschalter geschlossen und der andere geöffnet ist, das gewünschte Leistungsniveau erreicht ist und durch das Ansprechverhalten der Steuerschaltung auf die Unterdruckschalter auch im wesentlichen eingehalten wird.

Ergänzbar ist diese automatische angenäherte Konstanthaltung der Leistungsaufnahme eines Staubsaugermotors durch zusätzliche Schalter, die weitere, manuell einstellbare Leistungsabgabestufen definieren durch Umschaltung vom Benutzer.

Bei einer solchen Steuerung der Leistungsaufnahme eines Staubsaugergebläsemotors kann sich als problematisch der Umstand erweisen, daß die Netzspannung Schwankungen aufweisen kann, die zwar bei der automatischen Steuerung über die Unterdruckschalter ausgeglichen wird, aber bei manuell abrufbaren Schaltstellungen zu erheblichen Leistungsdifferenzen führen kann. Solche Probleme können schon bei üblichen Netzspannungsschwankungen auftreten, weil die Speisespannung eines Verbrauchers in die Leistungsdefinition quadratisch eingeht; sie treten besonders gravierend dort in Erscheinung, wo aufgrund nationaler Regelungen mit anderen Netzspannungen gearbeitet wird, so daß nicht selten Netzspannungsschwankungen im überregionalen Bereich zwischen 190 bis 260 Volt auftreten, gegebenenfalls zusätzlich belastet noch durch unterschiedliche Netzfrequenzen.

Zwar ist es möglich, für jeden regionalen oder nationalen Bereich unterschiedliche Leistungsdaten vorzugeben. Dies ist allerdings bei der Herstellung von Elektrogeräten im allgemeinen und Staubsaugern im speziellen umständlich und teuer, so daß der Erfindung die Aufgabe zugrundeliegt, hier Abhilfe zu schaffen und einen automatischen Staübsaugerbetrieb unabhängig von Netzspannungs- und Netzfrequenzschwankungen sicherzustellen, so daß auch bei manueller Vorgabe bestimmter Leistungsdaten (beispielsweise Einstellung auf einen 300 Watt-Betrieb oder 500 Watt-Betrieb ergänzend zur automatischen Unterdruckregelung oder einer sogenannten Booster-Stufe)diese Daten konstant eingehalten werden.

### Vorteile der Erfindung

Die erfindungsgemäße Vorrichtung zur Regelung der Leistungsaufnahme eines Staubsaugers löst diese Aufgabe mit den Merkmalen des Anspruchs 1 und hat den Vorteil, daß durch die Vorgabe konstanter gespeicherter Sollwertspannung-Vergleichswerte vollkommen unabhängig von einer erheblichen zugelassenen Schwankungsbreite der Netzspannungsversorgung oder auch der Netzfrequenz bei der (manuellen) Einstellung gewünschter Leistungsdaten diese auch effektiv vom Staubsauger erzielt und eingehalten werden, wobei es in vorteilhafter Weise gelingt, Probleme bei der Erfassung und Bestimmung der einem Elektromotor zugeführten Spannungseffektivwerte zu beseitigen. Diese Probleme ergeben sich dann, wenn die einem Elektromotor über eine Phasenanschnittsteuerung zugeführte Spannung einen lückenden bzw. pulsierenden Betrieb aufweist, so daß eine einfache Integration der zugeführten Spannung, etwa an einem RC-Glied für die Bestimmung des Effektivwertes nicht ausreicht bzw. zu fehlerhaften Ergebnissen führt.

Die Erfindung verwendet in diesem Zusammenhang in vorteilhafter Weise gespeicherte Vergleichstabellen, die unter Zugrundelegung eines abgefragten und nachfolgend digitalisierten Spannungswertes der einem Elektromotor über die Phasenanschnittsteuerung zugeführten Versorgungsspannung sowie unter Einbeziehung des jeweiligen, von der Phasenanschnittsteuerung eingehaltenen Phasenwinkels, gegebenenfalls weiterer Daten, den tatsächlichen Effektivwert der dem Elektromotor zugeführten Spannung angeben zum Vergleich mit gespeicherten Sollwertspannungen, die aus einer manuellen Vorgabe herrühren.

Durch die in den Unteransprüchen aufgeführten Maßnahmen sind vorteilhafte Weiterbildungen und Verbesserungen der Erfindung möglich. Besonders vorteilhaft ist die Einbeziehung der insofern vollautomatisch auf konstante Leistungsaufnahme regelnden Vorrichtung in den Bereich eines Mikroprozessors, der auch die gespeicherten Vergleichswerte, gegebenenfalls in Verbindung mit einem zusätzlichen externen Speicher, umfaßt, entsprechende Anzeigeleuchten für die jeweils eingenommenen Betriebszustände ansteuert und insbesondere in der Lage ist, die Phasenanschnittsteuerung so zu beaufschlagen, daß die gewünschte Leistungskonstantregelung sichergestellt ist.

### Zeichnung

Ein Ausführungsbeispiel der Erfindung ist in der Zeichnung dargestellt und wird in der nachfolgenden Beschreibung näher erläutert. Es zeigen:
- Fig. 1: in zum Teil auch detaillierterer Darstellung die Regelschaltung zur Konstanthaltung der Leistungsaufnahme eines Staubsaugermotors und
- die Figuren 2 und 3: ein Flußdiagramm der Regelschaltung.

### Beschreibung der Ausführungsbeispiele

Der Grundgedanke vorliegender Erfindung besteht darin, zur Konstanthaltung der Leistungsaufnahme eines Staubsaugerantriebsmotors unabhängig von Netzspannungsschwankungen oder Netzspannungsänderungen bzw. auch Änderungen der Netzfrequenz die am Elektromotor direkt abfallende Spannung mit Hilfe geeigneter Sensormittel zu erfassen und zur Regelung auszunutzen, indem diese Spannung nach entsprechender Aufbereitung mit vorgegebenen Sollwerten für den jeweiligen Betriebszustand verglichen wird; dabei wird auf tatsächliche Effektivwerte abgestellt unter Einbeziehung gespeicherter Tabellenwerte.

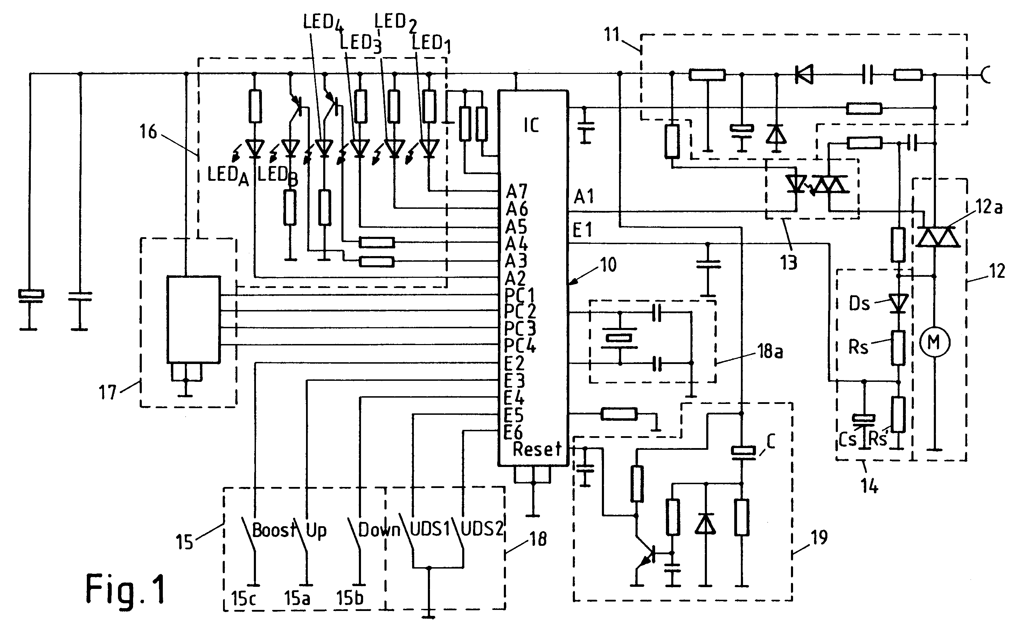

Die in Fig. 1 dargestellte, zum größten Teil diskrete Schaltungselemente aufweisende elektronische Steuer- und Regelschaltung für den Betrieb eines Staubsaugermotors umfaßt eine zentrale Elektronikschaltung 10, vorzugsweise in Form eines Mikroprozessors oder Mikrorechners, die im folgenden auch als IC bezeichnet wird und der im folgenden noch zu erläuternde Schaltungsblöcke Daten bzw. Signale zuliefern, während andere Schaltungsblöcke von der IC-Schaltung angesteuert werden.

Zur Stromversorgung ist ein Netzschaltungsteil 11 vorgesehen; die Phasenanschnittschaltung 12 wird vom Ausgang A1 der IC-Schaltung über einen Optokoppler 13 potentialfrei angesteuert; parallel zum vom Triac 12a der Phasenanschnittschaltung 12 mit lückenden Sinushalbwellen versorgtem Elektromotor M als Gebläseantriebsmotor des Staubsaugers ist ein Spannungssensor 14 geschaltet, der die Versorgungsspannung des Elektromotors M erfaßt und einem Eingang E1 des IC zuführt.

Auf der anderen Seite des IC vervollständigt sich der Schaltungsaufbau der Ansteuerschaltung durch einen manuellen Tastenblock 15, der auf Eingänge E2, E3, E4 der IC-Schaltung 10, also des Mikroprozessors arbeitet; es ist noch ein Anzeigeblock 16 vorgesehen, bestehend aus einer größeren Anzahl von den jeweiligen Betriebsstand des Staubsaugers anzeigenden Leuchten, vorzugsweise Leuchtdioden, die mit den Ausgängen A2 bis A7 des IC verbunden sind.

Zur Abspeicherung spezieller, auch individueller Daten des jeweiligen, mit der Ansteuerschaltung versehenen Geräts kann noch ein externer Speicher als sogenannter E²PROM vorgesehen sein, der das Bezugszeichen 17 trägt und mit Ein/Ausgängen PC1, PC2, PC3, PC4 der IC-Schaltung verbunden ist. Es versteht sah natürlich, daß dieser Speicher auch intern im IC organisiert sein kann.

Einen auf konstante Saugleistung geregelten Automatikbetrieb des Staubsaugers ermöglichender Unterdrucksensor 18 umfaßt zwei auf unterschiedliche Unterdruckwerte abgestimmte Unterdruckschalter UDS1 und UDS2, die mit Eingängen E5 und E6 des IC verbunden sind.

Die Schaltung vervollständigt sich durch eine äußere Quarzbeschaltung 18 des IC sowie eine Reset-Schaltung 19, die der Rücksetzung des IC auf einen definierten Anfangsschaltungszustand bei Wiedereinschalten des Gerätes dient.

Der Netzschaltungsteil umfaßt neben einigen Gleichrichter- und Zenerdioden Kondensatoren und Reihenwiderstande zur Berühigung der Versorgungsspannung; der Spannungssensor 14 besteht aus der mit den Motoranschlußklemmen verbundenen Reihenschaltung einer Gleichrichterdiode Ds, eines Reihenwiderstandes Rs sowie der sich daran anschließenden Parallelschaltung eines RC-Gliedes aus dem Widerstand Rs' sowie des Kondensators Cs. Auf diese Weise ergibt sich am Kondensator Cs des RC-Gliedes ein beruhigter Gleichstromwert, der mit der am Elektromotor M anliegenden Spannung verknüpft ist, jedoch keinesfalls deren Effektivwert angibt, was aufgrund der Ansteuerung des Elektromotors M über eine Phasenanschnittschaltung auch nicht möglich ist, wegen der Unregelmäßigkeit, die sich aus den unterschiedlichen Anschnittpunkten der Wechselstromhalbwellen ergeben.

Die Spannungssensor-Ausgangsgleichspannung gelangt auf den Eingang E1 der IC-Schaltung 10 und wird dort mittels eines Analog/Digitalwandlers digitalisiert und anschließend weiterverarbeitet.

Diese Weiterverarbeitung zu einer auswertbaren Effektivwertangabe der Motorspeisespannung erfolgt mit Hilfe von tabellarisch beispielsweise im externen Speicher 17 gespeicherten Aufbereitungsdaten, die für jeden gemessenen Gleichspannungswert vom Spannungssensor den korrekten Effektivwert angeben, wobei ergänzend auch der momentane Phasenanschnittwinkel eine Berücksichtigung findet, der dem die Phasenanschnittschaltung 12 steuernden Mikroprozessor ja ohnehin bekannt ist, da dieser Winkel von ihm selbst vorgegeben wird. Ferner berücksichtigen die Tabellen auch die Netzfrequenz, so daß es möglich ist, die Leistungsabgabe bzw. die Leistungsaufnahme des Elektromotors in präziser Weise konstant zu halten unter Berücksichtigung des aus den Tabellenwerten gewonnenen echten Effektivwerts der Ist-Spannung, die mit durch den manuellen Ansteuerblock mitbestimmten Sollwertspannungen für die gewünschte Leistungsabgabe verglichen wird.

Die Grundfunktion der in Fig. 1 dargestellten Schaltung läuft also so ab, daß durch entsprechende Betätigung der Up- bzw. Down-Tastschalter ein bestimmter Leistungswert eingestellt wird, entweder dadurch, daß man die jeweiligen Taster wiederholt betätigt, bis eine entsprechende Leuchtanzeige auf den gewünschten Leistungswert gesprungen ist, oder indem man die Tasten auch für einen vorgegebenen Zeitraum für steigende Leistungsanforderungen (Up-Taster) bzw. geringere Leistungsanforderungen (Down-Taster) betätigt, woraufhin dann fortlaufend auf höhere Sollwertvergleichsspannungen für die Leistungsabgabe bzw. auf geringere Sollwertvergleichsspannungen geschaltet wird.

Diese Sollwertumschaltungen werden begleitet durch die entsprechende Anzeige nach außen über die Leuchtdioden des Anzeigeblocks 16, wobei bei der dargestellten Ausführungsform, die lediglich als beispielhaft zu verstehen ist, vier unterschiedliche manuell einstellbare Leistungsdaten aufeinanderfolgend oder auch als Leuchtband durch grüne Leuchtdioden LED1 bis LED4 anzeigbar sind, die beispielsweise, um hier auch zum besseren Verständnis mit numerischen Angaben zu arbeiten, die die Erfindung aber nicht einschränken, Staubsaugerleistungswerte von 300, 400, 700 und 900 Watt umfassen können.

Es ist dann noch ein gesonderter sogenannter Boost-Schalter 15c vorgesehen - die Up/Down-Schalter sind mit 15a bzw. 15b bezeichnet -, der dazu dient, den Staubsauger kurzzeitig auf die höchstmögliche Leistungsabgabe hochzusteuern, die für einen vorgegebenen, von der IC-Schaltung bestimmten Zeitraum eingehalten wird und aus welcher die Steuerschaltung dann automatisch mit entsprechendem Verriegelungsverhalten zurückkippt, damit nicht ständig in der Booster-Stufe gearbeitet wird, in welcher jedenfalls die Gefahr besteht, daß der Motor durch die zugeführte Überspannung geschädigt wird. Die Booster-Stufe wird durch eine rote Leuchtdiode LED_{B} angezeigt.

Man erkennt, daß es auf diese Weise und unter Zugrundelegung der geschilderten Merkmale möglich ist, im weitesten Maße unabhängig von der äußeren Netzspannungsversorgung, ob diese nun beispielsweise bei 180 oder 260 Volt liegt und unabhängig von den Werten der Netzfrequenz einwandfrei konstante Leistungsdaten des Staubsaugers einstellen zu können, weil durch die Sensorabfrage der am Elektromotor M anliegenden, über die Phasenanschnittsteuerung zugeführten Speisespannung, die Umwandlung in echte Effektivwertdaten unter Einbeziehung von tabellarischen gespeicherten Werten und den nachfolgendem Vergleich mit konstanten Sollwertspannungen Netzspannungsschwankungen eliminiert bzw. unterschiedliche Netzspannungen deshalb ausgeschaltet werden, weil durch die von der IC-Schaltung in ihrem Verhalten bestimmte Phasenanschnittsteuerung durch entsprechende Verstellung des Phasenwinkels in der lückenden Versorgungsspannung grundsätzlich die gewünschten Leistungsdaten eingehalten werden können, die manuell vorgegeben werden.

Dabei versteht es sich, daß in der gesamten Auslegung der Schaltung mit einer gewissen Vorgabe zu arbeiten ist, die sicherstellt, daß auch bei einer Versorgung mit nur beispielsweise 180 Volt (als beispielsweise Annahme einer niedrigsten Netzspannung, die von der erfindungsgemäßen Schaltung noch ausgeglichen bzw. aufgefangen werden kann) die gleichen Leistungsenddaten erzielt werden wie bei einer Versorgungsspannung von 260 Volt, bei der dann entsprechend stark heruntergeregelt werden muß, also mit spätem Zündwinkel der Phasenanschnittsteuerung gearbeitet werden muß, um bei dieser hohen Versorgungsspannung die vorgegebenen gewünschten Leistungsdaten einzuhalten.

Die bisher geschilderte Schaltung wird schließlich noch ergänzt durch eine Automatikstufe, zu deren Anzeige eine grüne Leuchtdiode LED_{A} dient und zu deren Realisierung bei dem dargestellten Ausführungsbeispiel lediglich zwei Unterdruckschalter UDS1 und UDS2 im Ansaugrohr als Istwertgeber für den im Saugrohr herrschenden Unterdruck vorgesehen sind. Diese Unterdruckschalter arbeiten im Grundprinzip so, wie in der weiter vorn schon erwähnten EP 0 379 680 B1 angegeben, so daß auf Aufbau und Funktion dieser Automatikstufe nicht mehr weiter eingegangen zu werden braucht; eingeschaltet werden kann die Automatikstufe beispielsweise dadurch, daß bei wiederholter Betätigung des Down-Tasters 15b als Endposition auf die Automatikstufe mit Anzeige über die Leuchtdiode LED_{A} übergegangen wird. Hierbei wird dann von der Spannungsregelung abgegangen, da nunmehr eine echte Saugrohrunterdruckregelung vorherrscht, die anderen Bedingungen gehorcht, so wie sie in der EP 0 379 680 B1 beschrieben sind.

Die Reset-Schaltung 19 umfaßt einen Versorgungsspannung-Sensorkondensator C, wobei die Schaltung so getroffen ist, daß sich dieser bei auch nur kurzzeitigem Abschalten des Geräts jedenfalls in einem solchen Maße entlädt, daß sich bei erneutem Einschalten ein solcher anfänglicher Stromladestoß am Kondensator C ergibt, daß ein nachgeschalteter Transistor T leitend gesteuert wird und den Reset-Eingang der IC-Schaltung 10 zuverlässig zurückstellt.

Dabei enthält der (externe) Speicherblock 17 ferner noch gespeicherte Daten, die der anfänglichen Initialisierung dienen; so muß beispielsweise verhindert werden, daß ein Benutzer die Booster-Stufe ständig in Betrieb hält, indem er eine interne Sperrung der Booster-Anfrage durch kurzzeitiges Ein- und Ausschalten des Geräts überläuft und sofort wieder die Booster-Stufe durch Betätigen des Schalters 15c erreicht. Im externen Speicher sind auch solche vorhergehenden (history) Schaltzustände aufgenommen und verhindern beispielsweise bei Wiedereinschaltung des Gerätes den sofortigen Übergang auf die Booster-Stufe dann, wenn das Gerät beispielsweise in der Booster-Stufe ausgeschaltet wurde.

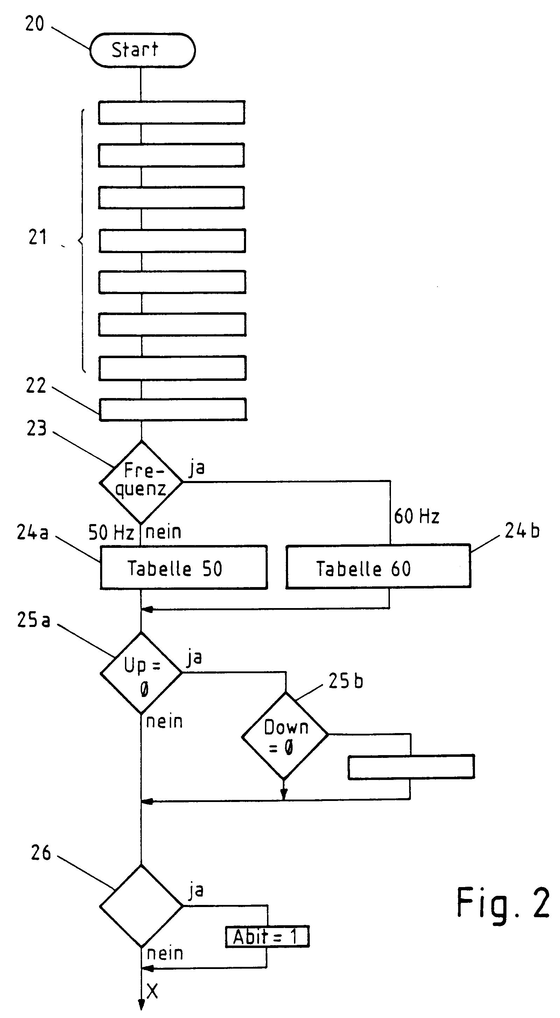

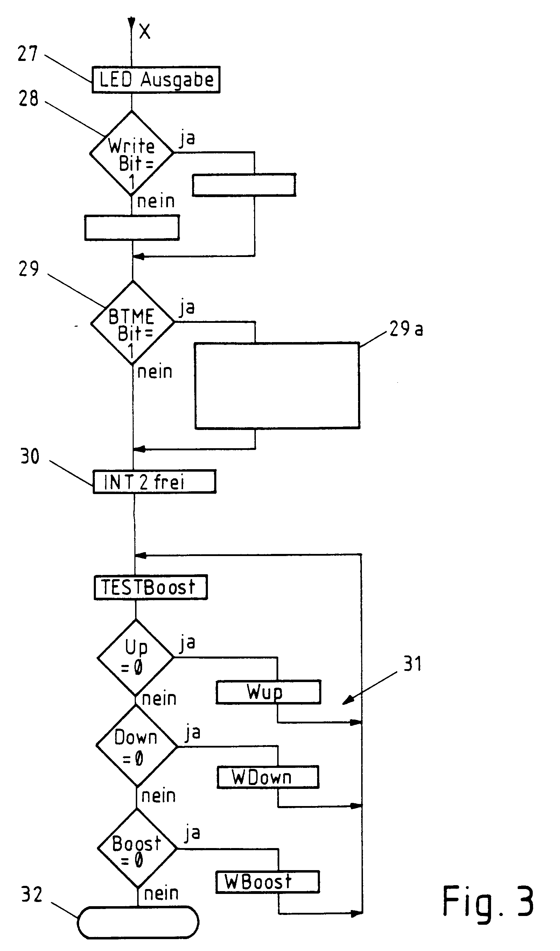

Das in den Figuren 2 und 3 angegebene Flußdiagramm für den Betriebsablauf enthält einem Startblock 20 nachgeschaltete Initialisierungsblöcke 21, denen eine Erfassungsstufe 22 der jeweiligen Netzfrequenz (Hertz-Test) folgt.

Je nachdem, welche Netzfrequenz festgestellt worden ist, wird in einer nachfolgenden Schaltungsstufe 23 auf Tabelle 50 oder auf Tabelle 60 des externen Speichers 17 geschaltet, damit die korrekten Ausgangsvergleichswerte für die spannungseffektivwertbestimmung und die gewünschte Leistungsansteuerung des Elektromotors vorliegen.

An die Tabellenübernahmenblöcke 24a, 24b schließen sich zwei weitere Entscheidungsblöcke 25a, 25b an, die auf die Möglichkeit abstellen, die dem Benutzer auch bewußt geboten wird, daß man nämlich beim Einschalten die Up/Down-Tasten schon gedrückt hält, wodurch sich unterschiedliche Anfangszustände im Betrieb ergeben können. Üblicherweise ist die Schaltung so getroffen, daß das Gerät mit der Betriebsstellung anfängt, mit welcher es auch abgeschaltet worden ist; durch eine anfängliche Betätigung dieser Tasten sind andere Einstellungen möglich.

Der nachfolgende Entscheidungsblock 26 dient der Abfrage, ob beim Abschalten die Automatikstufe eingeschaltet gewesen ist; trifft dies zu, wird ein Bit auf 1 gesetzt.

Es schließt sich dann ein Unterprogramm der LED-Ausgabe am Block 27 an, wodurch die LED ausgegeben wird, die tatsächlich aufgrund der eingenommenen Betriebsstufe anzusteuern ist.

Es schließt sich ein weiterer Entscheidungsblock 28 an, der dafür sorgt, daß dann, wenn ein sogenanntes Write-bit = 1 ist, der jeweilige Betriebszustand in den (externen) Speicher 17 eingeschrieben werden kann. Das Write-bit wäre beispielsweise 0, wenn beim Einschalten die Up/Down-Tasten gedrückt sind.

Es schließt sich dann ein Entscheidungsblock 29 an, der feststellt, ob ein Booster-Zustand vorliegt oder beim letzten Ausschalten vorgelegen hat; in diesem Fall ist ein Booster-bit = 1 und dann laufen entsprechende Zähler und Entscheidungskriterien am zugeordneten Block 29a ab, um beispielsweise wiederholtes Booster-Einschalten zu unterbinden.

Der nächste Block 30 gibt einen Interrupt zur Ansteuerung der Phasenanschnittsteuerung frei; bis zu diesem Zeitpunkt ist also noch keine Ausgangssteuerung von der IC-Schaltung erfolgt.

Es schließen sich dann noch verschiedene Entscheidungsblöcke und Funktionsschaltungen an, die einer Programmschleife "Tastaturabfrage" zuzuordnen sind, wobei sich diese Programmschleife 31 dann ständig wiederholt, was durch den Block 32 charakterisiert ist.

## Patentansprüche

1. Vorrichtung zur Regelung der Leistungsaufnahme eines Staubsaugers, dessen Gebläse von einem Elektromotor mit Phasenanschnittschaltung angetrieben ist,
- mit einem Mikroprozessor als Steuerschaltung,
- mit einem Spannungssensor (14) für die an dem Elektromotor (M) anliegende von der Phasenanschnittschaltung (12) zugeführte Wechselspannung und
- mit einer dem Spannungssensor nachgeschalteten den erfaßten Spannungswert in einen digitalisierten Spannungsistwert umwandelnden Verarbeitungsschaltung, wobei
- der Mikroprozessor diesen digitalisierten Spannungsistwert mit Hilfe einer gespeicherten Tabelle unter Berücksichtigung des eingestellten Phasenanschnittwinkels in einen Effektivwert der Motorspannung umwandelt, und mit einem Spannungsregler, der den Effektivwert mit einem manuell vorgegebenen Spannungssollwert vergleicht und in entsprechender Weise die phasenanschnittschaltung (12) ansteuert.

2. Vorrichtung nach Anspruch 1,
- mit manuell zu betätigenden Up-/Down-Tastern für die manuelle Leistungsvorgabe,
- mit einer Booster-Stufe für eine Sollwertvorgabe, die für eine vorgegebene Zeitdauer eine maximal zulässige Leistungsabgabe bewirkt und
- mit einer Automatikstufe, die auf innerhalb vorgegebener Grenzwerte liegenden Saugrohrunterdruck bei Wegfall des Sollwertspannungs/Istwerteffektivspannungs-Vergleichs regelt.

3. Vorrichtung nach Anspruch 2, mit Anzeigemitteln (LED1, LED2, LED3, LED4, LED_{A} , LED_{B}) für die von den Up-/Down-Taster angesteuerten Leistungsstufen, die Booster-Stufe bzw. die Automatikstufe.

4. Vorrichtung nach Anspruch 1, wobei der Spannungsregler in den Mikroprozessor implementiert ist.

5. Vorrichtung nach Anspruch 1 oder 2, mit einem wahlweise externen Speicher (17) für die Tabelle, der ergänzend historische Daten der Booster-Einstellung speichert und ausgibt.

6. Vorrichtung nach Anspruch 1, wobei die Verarbeitungsschaltung einen Gleichrichter, ein Glättungsglied zur Mittelwertbildung und einen Analog-Digital-Wandler umfaßt.

## Claims

1. A device for controlling the power consumption of a vacuum cleaner whose fan is driven by an electric motor with a phase-angle circuit,
- having a microprocessor as a control circuit,
- having a voltage sensor (14) for the alternating voltage which is applied to the electric motor (M) and is supplied by the phase- angle circuit (12) and
- having a processing circuit which is connected downstream of the voltage sensor and converts the sensed voltage value into a digitised voltage-actual-value,
- the microprocessor converting this digitised voltage-actual-value into a root-mean-square value of the motor voltage with the aid of a stored table and with regard to the set operating angle and
- having a voltage regulator which compares the root-mean-square value with a manually pre-set voltage desired value and drives the phase-angle circuit (12) in an appropriate manner.

2. A device in accordance with Claim 1,
- having manually operable up/down push buttons for manually pre-setting the power,
- having a booster stage for pre-setting a desired value, this booster stage effecting maximum power output for a pre-determined period of time and
- having an automatic stage which controls the suction pipe underpressure - lying within pre-determined boundary values - upon cessation of the desired value voltage/actual-value root-mean-square-value voltage comparison.

3. A device in accordance with Claim 2, having indicating means (LED1, LED2, LED3, LED4, LED_{A}, LED_{B}) for the power stages controlled by the up/down push buttons, the booster stage and the automatic stage.

4. A device in accordance with Claim 1, the voltage regulator being implemented in the microprocessor.

5. A device in accordance with Claim 1 or 2, having an optionally external store (17) for the table, which store in addition stores and outputs booster-setting historical-data.

6. A device in accordance with Claim 1, the processing circuit comprising a rectifier, a smoother for averaging and an analogue digital converter.

## Revendications

1. Dispositif de réglage de la puissance absorbée par un aspirateur de poussière dont la soufflante est entraînée par un moteur électrique, dans lequel :
- le circuit de commande est un microprocesseur,
- un détecteur de tension (14) mesure la tension alternative appliquée au moteur électrique (M) par le circuit de phase (12),
- un circuit d'exploitation, situé en aval du détecteur de tension, transforme la valeur de tension enregistrée en une valeur numérique réelle de tension,
tandis que
- le microprocesseur transforme cette valeur réelle de tension numérisée à l'aide d'une table mémorisée avec prise en compte de l'angle de phase réglé, en une valeur effective de la tension du moteur et, en utilisant un régulateur de tension qui compare la valeur effective à une valeur de tension de consigne prédéterminée à la main, commande en conséquence le circuit de phase (12).

2. Dispositif selon la revendication 1,
comportant :
- des touches manuelles haut/bas pour définir préalablement la puissance,
- un étage d'amplification à booster pour l'attribution d'une valeur de consigne qui, pendant une durée donnée, assure la fourniture d'une puissance maximale admissible,
- un étage d'automatisme qui régule la dépression d'aspiration, lorsqu'elle se trouve à l'intérieur de limites données, en abandonnant la comparaison des valeurs de tension effective réelles/valeurs de tension de consigne.

3. Dispositif selon la revendication 2,
comportant des indicateurs (LED1, LED2, LED3, LED4, LED_{A}, LED_{B}) concernant les étages de puissance commandés par les touches haut/bas, l'étage d'amplification et l'étage d'automatisme.

4. Dispositif selon la revendication 1,
où le régulateur de tension est implémenté dans le microprocesseur.

5. Dispositif selon la revendication 1 ou 2,
avec une mémoire (17), qui peut être externe, contenant la table et qui en plus enregistre et délivre des données historiques supplémentaires du réglage du booster.

6. Dispositif selon la revendication 1,
où le circuit d'exploitation comprend un redresseur, un organe de lissage pour établir une valeur moyenne et un convertisseur analogique-numérique.
